# EUROPÄISCHE PATENTANMELDUNG

(11) **EP 0 761 989 A2**
(43) Veröffentlichungstag der Anmeldung: **12.03.1997**
(21) Anmeldenummer: 96111337.0
(22) Anmeldetag: 13.07.1996
(51) Int. Cl.: F16B 12/20

(54) **Verbindungsbeschlag zum lösbaren Verbinden zweier Möbelteile**

(30) Priorität: 21.08.1995 AT 1410/95
(71) Anmelder: Julius Blum Gesellschaft m.b.H., A-6973 Höchst (AT)
(72) Erfinder: Röck, Erich, 6973 Höchst (AT); Brüstle, Klaus, 6973 Höchst (AT)
(74) Vertreter: Torggler, Paul, Dr.

(57) **Zusammenfassung**

Ein Verbindungsbeschlag zum lösbaren Verbinden zweier plattenförmiger Möbelteile (2, 4). An einem der Möbelteile (2) ist ein Zapfen (1) zu befestigen und in den anderen Möbelteil (4) ist ein zylindrisches Gehäuse (3) einsetzbar. In dem Gehäuse (3) ist ein von einer Feder (16) beaufschlagter Riegelteil (9) angeordnet, der den in das Gehäuse (3) ragenden Zapfen (1) arretiert. Der Zapfen (1) ragt durch eine Öffnung (7) im Mantel des Gehäuses (3). Im Gehäuse (3) ist ein Sperrteil (20) angeordnet, der den Riegelteil (9) entgegen der Federwirkung arretiert und der durch den Zapfen (1) aus der Sperrstellung bringbar ist.

## Beschreibung

Die Erfindung bezieht sich auf einen Verbindungsbeschlag zum lösbaren Verbinden zweier Möbelteile, insbesondere zum Verbinden zweier plattenförmiger Möbelteile, mit einem an einem der Möbelteile zu befestigenden Zapfen und einem in den anderen Möbelteil einsetzbaren zumindestens bereichsweise zylindrischen Gehäuse, in dem ein von einer Feder beaufschlagter Riegelteil angeordnet ist der den in das Gehäuse ragenden Zapfen arretiert, wobei der Zapfen durch eine Öffnung im Mantel des Gehäuses ragt und daß im Gehäuse ein Sperrteil angeordnet ist, der den Riegelteil entgegen der Federwirkung arretiert.

Die EU-B1 0 058 220 zeigt einen Verbindungsbeschlag zum lösbaren Verbinden zweier im rechten Winkel zueinander stehender plattenförmiger Möbelteile, wobei in jeden Möbelteil ein Gehäuse einsetzbar ist. In einem Gehäuse ist ein von einer Feder beaufschlagter Hebel gelagert, der einen Haken aufweist. In Montagelage ragt dieser Hebel stirnseitig in das andere Gehäuse und rastet dort hinter einem Rastvorsprung ein, wodurch die beiden Möbelteile miteinander verbunden werden. Durch Verdrehen eines Gewindebolzens, der im gleichen Gehäuse gelagert ist, kann der Haken aus seiner Riegelstellung gebracht werden.

Die AT-PS 390 480 beschreibt einen Verbindungsbeschlag, bei dem ein in einem Möbelteil verankerter Zapfen mit seinem Kopf radial in einem im anderen Möbelteil gelagerten zylindrischen Spannteil ragt. Durch Verdrehen des Spannteiles wird der Zapfen in den Möbelteil hineingezogen und es kommt zu einer festen Verbindung der beiden Möbelteile.

Aufgabe der Erfindung ist es, einen Verbindungsbeschlag der eingangs erwähnten Art dahingehend zu verbessern, daß eine Spannung zwischen den beiden Möbelteilen erreicht wird, ohne daß es notwendig ist, beim Kuppeln der Verbinderteile ein Werkzeug zu verwenden und wobei der Zapfen von der Stirnseite her in den Möbelteil eingesetzt werden kann, in dem das Gehäuse lagert.

Die erfindungsgemäße Aufgabe wird dadurch erreicht, daß der Sperrteil mit einem federnden Mitnehmer versehen ist, an dem der Zapfen, wenn er in das Gehäuse eingeschoben wird, anstößt und über den der Zapfen den Sperrteil bewegt, wenn er in das Gehäuse eingeschoben wird, und der dem Zapfen ausweicht, wenn dieser aus dem Gehäuse herausgezogen wird, sodaß der Sperrteil durch den Zapfen aus der Sperrstellung bringbar ist.

Nachfolgend wird ein Ausführungsbeispiel der Erfindung anhand der Figuren der beiliegenden Zeichnungen beschrieben.

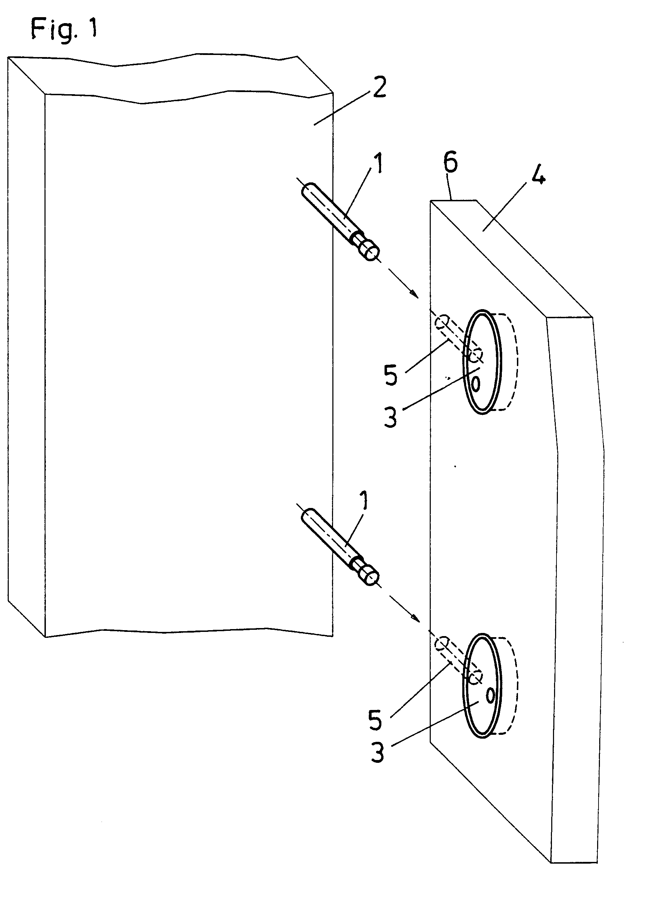

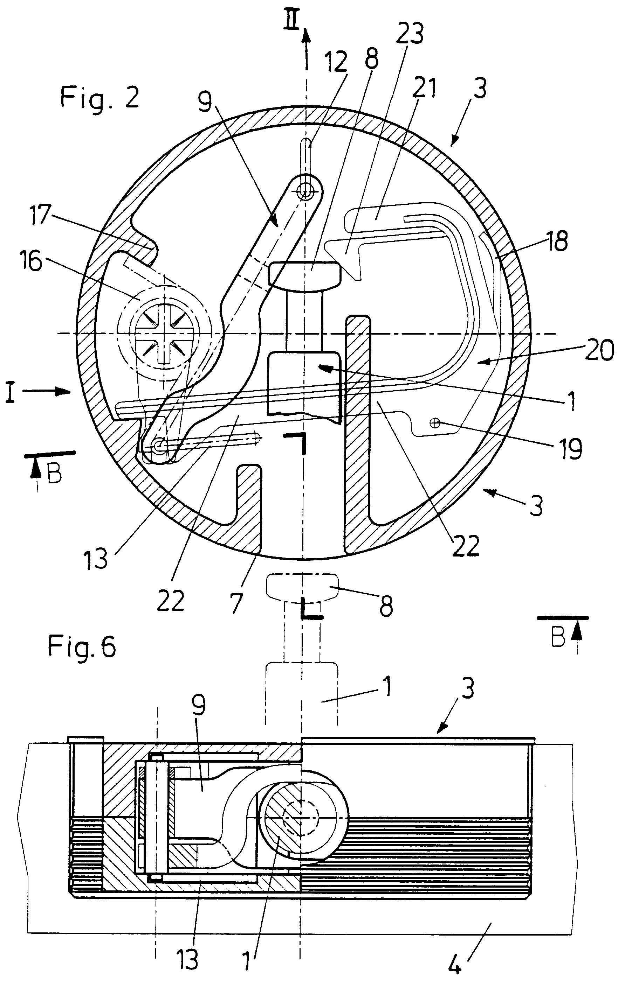

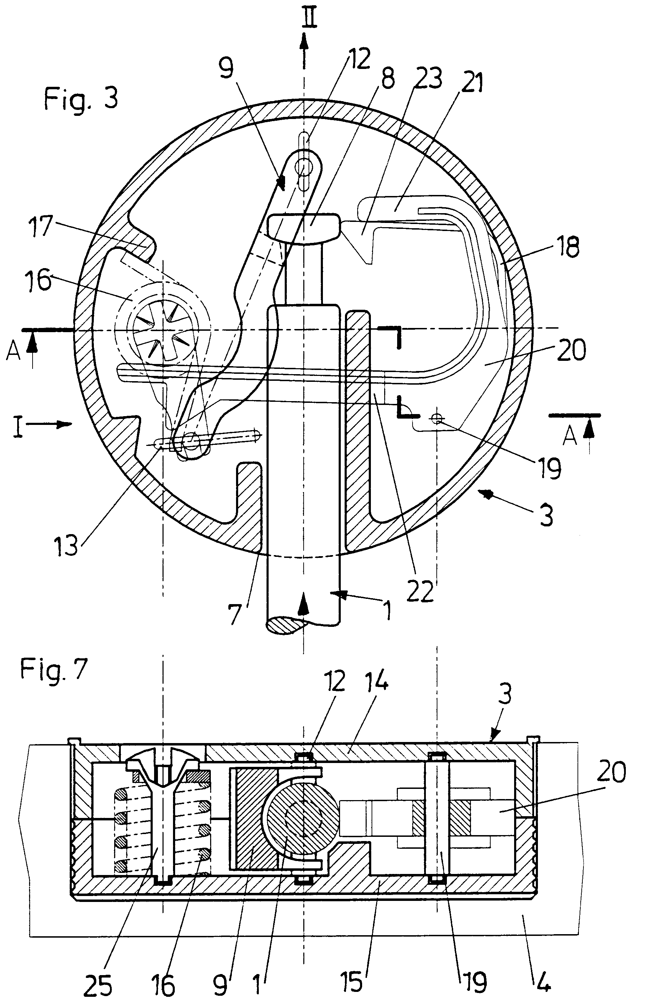

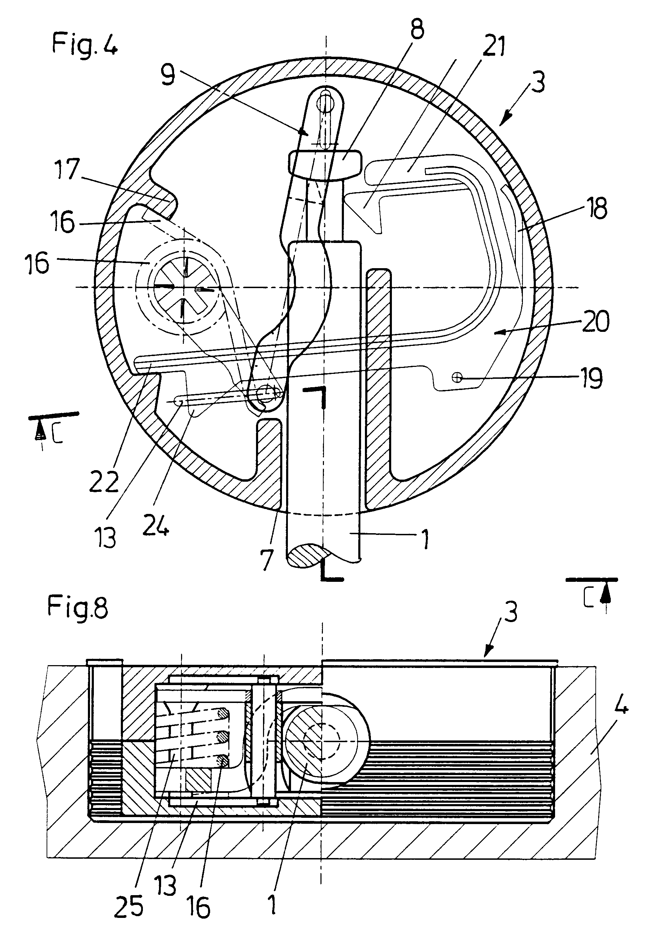

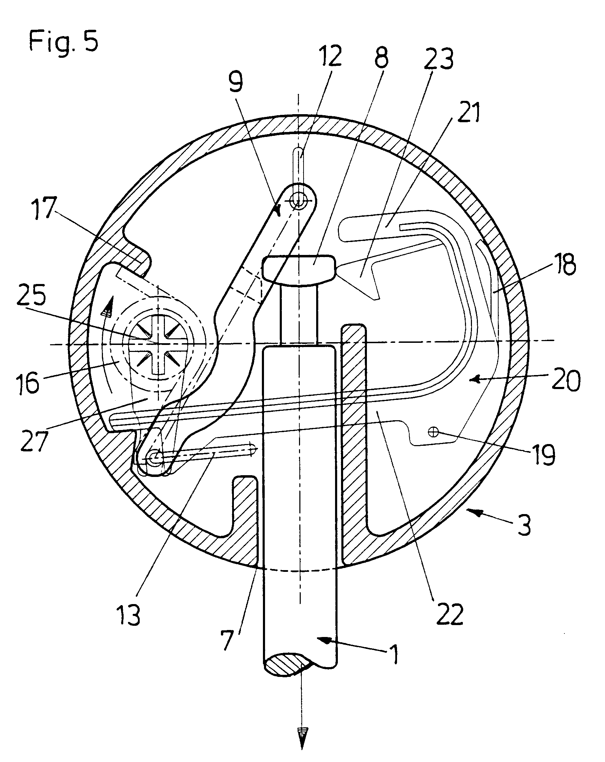

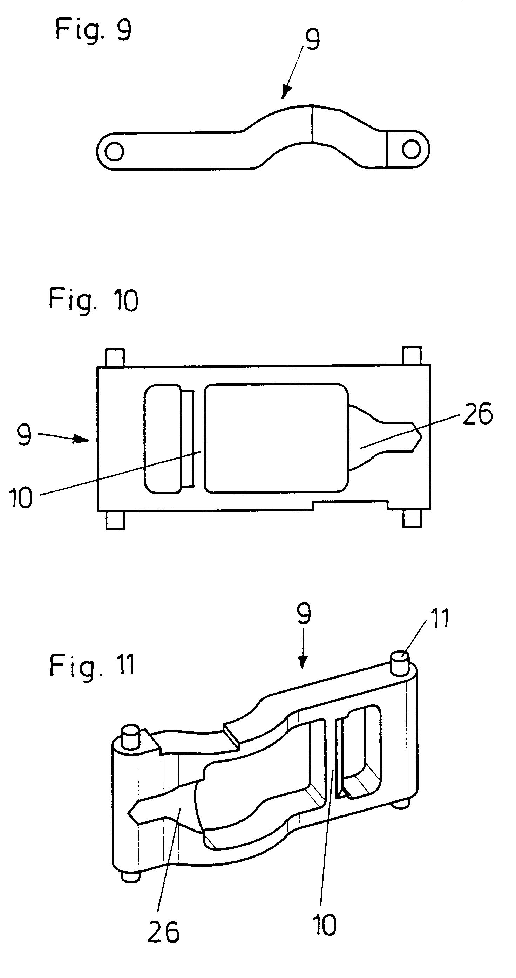

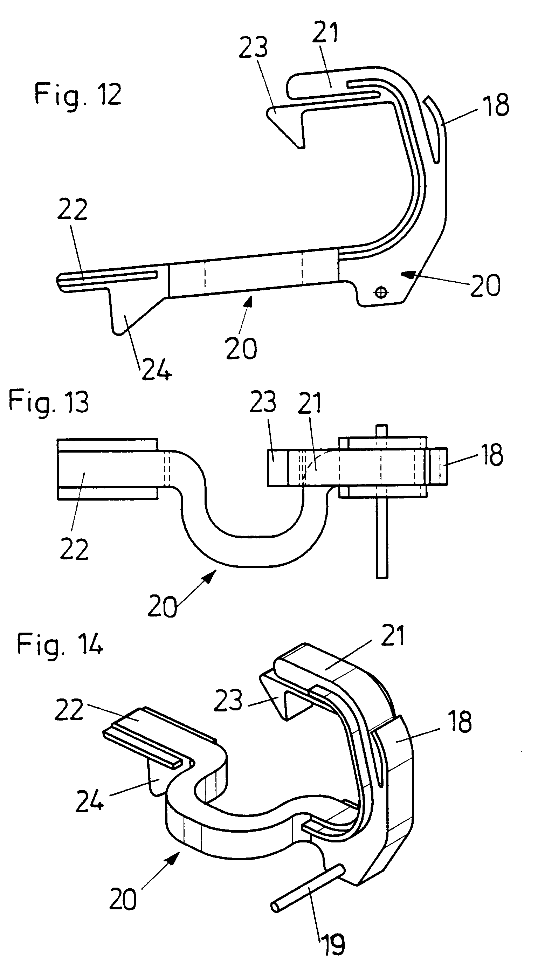

Die Fig. 1 zeigt schematisch zwei Möbelteile, die mittels des erfindungsgemäßen Verbindungsbeschlages zu verbinden sind; die Fig. 2 ist ein Querschnitt durch ein Gehäuse in der Stellung, in der der Zapfen in das Gehäuse eingeschoben wird; die Fig. 3 ist ein Querschnitt durch das Gehäuse, wobei der Zapfen vom Riegelteil erfaßt wird; die Fig. 4 ist ein Querschnitt durch das Gehäuse, wobei der Zapfen in der voll verriegelten Stellung gezeigt ist; die Fig. 5 ist ein Querschnitt durch das Gehäuse während der Demontage des Zapfens; die Fig. 6 ist ein Schnitt nach der Linie B-B der Fig. 2; die Fig. 7 ist ein Schnitt nach der Linie A-A der Fig. 3; die Fig. 8 ist ein Schnitt nach der Linie C-C der Fig. 4; die Fig. 9 ist eine Seitenansicht des Riegelteiles; die Fig. 10 ist eine Draufsicht auf den Riegelteil; die Fig. 11 ist ein Schaubild des Riegelteiles; die Fig. 12 ist eine Seitenansicht des Sperrteiles; die Fig. 13 ist eine Draufsicht auf den Sperrteil und die Fig. 14 ist ein Schaubild des Sperrteiles.

Wie aus der Fig. 1 ersichtlich, sind die Zapfen 1 flachseitig in eine Möbelwand 2 eingesetzt. Auf die Art der Befestigung der Zapfen 1 in der Möbelwand 2 soll in diesem Rahmen nicht eingegangen werden, sie kann auf jede herkömmliche Art erfolgen. Beispielsweise kann der Zapfen 1 in einen in die Möbelwand 2 eingesetzten Dübel eingeschraubt sein.

Das zum Zapfen 1 korrespondierende Gehäuse 3 ist ebenso flachseitig in eine Möbelwand 4 eingesetzt. In der Möbelwand 4 ist bei jedem Gehäuse 3 eine Bohrung 5 vorgesehen, die zur Stirnseite 6 der Möbelwand 4 führt. Der Zapfen 1 ist von der Stirnseite 6 her in die Möbelwand 4 einsetzbar und ragt seitlich durch eine Öffnung 7 in das Gehäuse 3.

Der Zapfen 1 ist an seinem freien Ende mit einem Kopf 8 versehen, an dem ein im Gehäuse 3 gelagerter Riegelteil 9 angreift.

Der Riegelteil 9 ist wie insbesondere aus den Fig. 10 und 11 ersichtlich als rechteckiger Rahmen ausgeführt und weist eine Querstrebe 10 auf, die am Kopf 8 des Zapfens 1 angreift.

Der Riegelteil 9 ist mittels Zapfen 11, die sich bei seinen beiden Enden befinden, in Nuten geführt, die lineare Führungsbahnen 12, 13 im Gehäuse 3 bilden. Eine Führungsbahn 12 ist dabei vor dem Ende des Zapfens 1 in der Verlängerung seiner Längsmittelachse angeordnet. Die zweite Führungsbahn 13 befindet sich beim anderen Ende des Riegelteiles 9 und verläuft annähernd im rechten Winkel zur erstgenannten Führungsbahn 12. Obwohl bei der Beschreibung des Ausführungsbeispieles jeweils von einer Führungsbahn 12 und einer Führungsbahn 13 gesprochen wird, sind die Nuten vorteilhaft an beiden Seiten des Riegelteiles 9 in den beiden Seitenwänden 14, 15 des Gehäuses ausgebildet. Die Führungsbahn 13 ist nicht exakt im rechten Winkel zum Zapfen 1 ausgerichtet, sondern steigt mit einer leichten Schräge zum Zapfen 1 hin an.

Der Riegelteil 9 wird an dem Ende, das sich bei der Führungsbahn 13 befindet, von einer Schenkelfeder 16 beaufschlagt, die den Riegelteil 9 in seine Sperrstellung drückt. Die Schenkelfeder 16 stützt sich an einem Zapfen 17 an der inneren Gehäusewand des Gehäuses 3 ab.

Im Gehäuse 3 ist ein Sperrteil 20 angeordnet, der den Riegelteil 9 in der Entriegelungsstellung hält. Der Sperrteil 20 lagert auf einer Achse 19 im Gehäuse 3. An ihm ist eine Feder 18 ausgebildet, die auf die innere Wand des Gehäuses 3 drückt und damit den Sperrteil 20 in die Sperrstellung drückt.

Der Sperrteil 20 ist U-förmig mit einem kürzeren Schenkel 21 und einem längeren Schenkel 22 ausgebildet. Am kürzeren Schenkel 21 liegt ein Mitnehmer 23 an, der beim Einschieben des Zapfens 1 vom Kopf 8 des Zapfens 1 an den Sperrteil 20 gedrückt wird.

Am längeren Schenkel 22 ist eine Sperrnase 24 ausgebildet, die den Riegelteil 9 in seiner entriegelten Stellung hält.

Der Sperrteil 20 und der Mitnehmer 23 sind vorzugsweise gemeinsam aus Kunststoff gespritzt, wobei der Mitnehmer 23 relativ zum Sperrteil 20 elastisch kippbar ist.

Innerhalb der Schenkelfeder 16 befindet sich ein Drehteil 25, mit dem die Schenkelfeder mittels eines Kreuzschraubenziehers gespannt werden kann, wobei der Riegelteil 9 von der Schenkelfeder 16 entlastet wird.

Bevor der Zapfen 1 in das Gehäuse 3 eingeführt wird, stützt sich der Riegelteil 9 an der Rastnase 24 des Sperrteiles 20 ab. Der Sperrteil 20 und der Riegelteil 9 befinden sich in der in der Fig. 2 gezeigten Stellung.

Wird der Zapfen 1 in die Öffnung 7 und in das Gehäuse 3 eingeschoben, dann stößt sein Kopf 8 am Mitnehmer 23 an und drückt den Mitnehmer 23 an den Schenkel 21 des Sperrteiles 20, wodurch der Sperrteil 20 um die Achse 19 gedreht wird. Durch diese Drehung wird die Sperrnase 24 von der Anschlagfläche 26 am Riegelteil 9 weggedrückt und der Riegelteil 20 wird von der Schenkelfeder 16 in der Richtung der Pfeile I, II der Fig. 2 und 3 bewegt.

Durch die Führungsbahnen 12, 13 bewegt sich der Riegelteil 9 nicht nur in der Richtung zum Zapfen 1 sondern auch in der Richtung der Längsmittelachse, d.h. in der Richtung des Pfeiles II der Fig. 2 und 3. Da der Riegelteil 9 mit seiner Querstrebe 10 am Kopf 8 des Zapfens 1 angreift, wird der Zapfen 1 von der Schenkelfeder 16 tiefer in das Gehäuse 3 gezogen.

Zum Lösen der Verbindung zwischen dem Zapfen 1 und dem Gehäuse 3 wird die Schenkelfeder 16 mittels eines Kreuzschraubenziehers gespannt und der Riegelteil 9 vom Federdruck entlastet. Der Zapfen 1 wird vorteilhaft ein kurzes Stück aus dem Gehäuse herausgezogen. Befindet sich der Riegelteil 9, der beispielsweise über einen Arm 27 am Drehteil 25 angelenkt ist, in der in der Fig. 5 gezeigten Stellung, rastet der Sperrteil mit seiner Rastnase 24 beim Riegelteil 9 ein. Der Zapfen 1 kann daher aus dem Gehäuse 3 gezogen werden, wobei der Mitnehmer 23 aufgrund seiner Elastizität dem Kopf 8 des Zapfens 1 ausweicht.

Es ist ein wesentliches Merkmal der Erfindung, daß der Zapfen 1 nach dem Lösen des Riegelteiles, d.h. wenn der Riegelteil 9 in die in der Fig. 5 gezeigte Stellung gebracht wurde und der Sperrhebel 20 mit seiner Rastnase 24 beim Riegelteil 9 einrastet, im Gehäuse verbleiben kann, ohne von der Feder 16 wieder in die in der Fig. 4 gezeigte volle Arretierstellung gezogen zu werden.

Auf diese Art ist es möglich, die Verriegelung der Zapfen 1 in mehreren über die Höhe des Möbels verteilten Verbindungsbeschlägen nacheinander zu lösen und anschließend die Wand 2 mit den Zapfen 1 von der Wand 4 gerade abzuheben.

## Patentansprüche

1. Verbindungsbeschlag zum lösbaren Verbinden zweier Möbelteile, insbesondere zum Verbinden zweier plattenförmiger Möbelteile, mit einem an einem der Möbelteile zu befestigenden Zapfen und einem in den anderen Möbelteil einsetzbaren zumindestens bereichsweise zylindrischen Gehäuse, in dem ein von einer Feder beaufschlagter Riegelteil angeordnet ist, der den in das Gehäuse ragenden Zapfen arretiert, wobei der Zapfen durch eine Öffnung im Mantel des Gehäuses ragt und daß im Gehäuse ein Sperrteil angeordnet ist, der den Riegelteil entgegen der Federwirkung arretiert, dadurch gekennzeichnet, daß der Sperrteil (20) mit einem federnden Mitnehmer (23) versehen ist, an dem der Zapfen (1), wenn er in das Gehäuse (3) eingeschoben wird, anstößt und über den der Zapfen (1) den Sperrteil (20) bewegt, wenn er in das Gehäuse (3) eingeschoben wird, und der dem Zapfen (1) ausweicht, wenn dieser aus dem Gehäuse (3) herausgezogen wird, sodaß der Sperrteil (20) durch den Zapfen (1) aus der Sperrstellung bringbar ist.

2. Verbindungsbeschlag nach Anspruch 1, dadurch gekennzeichnet, daß der Sperrteil (20) mit einer Feder (18) versehen ist, die den Sperrteil (20) in die Sperrstellung drückt.

3. Verbindungsbeschlag nach Anspruch 1, dadurch gekennzeichnet, daß der Sperrteil (20) um eine Achse (19) drehbar ist.

4. Verbindungsbeschlag nach einem der Ansprüche 2 oder 3, dadurch gekennzeichnet, daß der Sperrteil (20) mit U-Profil mit ungleich langen Schenkeln (21, 22) ausgebildet ist, daß der Mitnehmer (23) am kürzeren Schenkel (21) anliegt und daß am längeren Schenkel (22) eine Sperrnase (24) ausgebildet ist, die den Riegelteil (9) entgegen der Wirkung der Feder (16) arretiert.

5. Verbindungsbeschlag nach einem der Ansprüche 1 bis 4, dadurch gekennzeichnet, daß der Riegelteil (9) als länglicher Teil ausgeführt ist, der an seinen beiden Enden in zwei geradlinigen Führungsbahnen (12, 13) im Gehäuse (3) geführt ist.

6. Verbindungsbeschlag nach Anspruch 5, dadurch gekennzeichnet, daß die Führungsbahnen (12, 13) annähernd im rechten Winkel zueinander ausgerichtet sind, wobei eine der Führungsbahnen (12) parallel zur Längsmittelachse des Zapfens (1) verläuft.

7. Verbindungsbeschlag nach Anspruch 4, dadurch gekennzeichnet, daß im Gehäuse (3) ein Drehteil (25) angeordnet ist, über den die Feder (16) mittels eines Schraubenziehers od.dgl. spannbar und der Riegelteil entriegelbar ist.

8. Verbindungsbeschlag nach Anspruch 4 oder 7, dadurch gekennzeichnet, daß die Feder (16) eine Schenkelfeder ist.

9. Verbindungsbeschlag nach einem der Ansprüche 1 bis 8, dadurch gekennzeichnet, daß der Riegelteil (9) als rechteckiger Rahmen mit einer Querstrebe ausgebildet ist, wobei die Querstrebe (10) am Zapfen (1) angreift.

10. Verbindungsbeschlag nach einem der Ansprüche 1 bis 9, dadurch gekennzeichnet, daµ der in das Gehäuse (3) eingesetzte Zapfen (1) von der Feder (16) über den Riegelteil (9) in das Gehäuse (3) gezogen wird.
